# EUROPÄISCHE PATENTANMELDUNG

(11) **EP 0 753 965 A2**
(43) Veröffentlichungstag der Anmeldung: **15.01.1997**
(21) Anmeldenummer: 96110289.4
(22) Anmeldetag: 26.06.1996
(51) Int. Cl.: H04N 7/14, H04N 7/173

(54) **Dienst zum Übertragen eines Videofilms**

(30) Priorität: 10.07.1995 DE 19524704
(71) Anmelder: Alcatel SEL Aktiengesellschaft, D-70435 Stuttgart (DE); ALCATEL N.V., NL-2288 BH Rijswijk (NL)
(72) Erfinder: Peters, Wolfgang, Dr., 71732 Tamm (DE); Schneider, Gerhard, 71229 Leonberg (DE)
(74) Vertreter: Schätzle, Albin, Dipl.-Phys.

(57) **Zusammenfassung**

Zur Bereitstellung eines interaktiven Videodienstes ist ein System mit einem Video-Server (VOD), einem diensteintegrierenden digitalen Netz (ISDN) und einer Endstelle (END) mit einem Bildtelefon (TEL) beschrieben. Der Video-Server (VOD) hat einen Speicher (MEMO) in dem mehrere Videofilme, z.B. Nachrichtensendungen, gespeichert sind und ist mittels einer Sendeeinheit (SEN) und einer Empfangseinheit (EMP) über das diensteintegrierende digitale Netz (ISDN) mit dem Bildtelefon (TEL) verbunden. Über das Bildtelefon (TEL) wählt der Kunde den Video-Server (VOD) zum Aufbau einer Wählverbindung an und wählt aus einem Angebot an Videofilmen einen aus. Der ausgewählte Videofilm wird mittels einer Steuereinheit (CTRL) im Video-Server (VOD) aus dessen Speicher gelesen und in Echtzeit über die Wählverbindung zum Bildtelefon (TEL) übertragen. Der Kunde kann jederzeit die Wählverbindung unterbrechen, wodurch die Übertragung des Videofilms gestoppt wird.

## Beschreibung

Die Erfindung betrifft einen Dienst zum Übertragen eines Videofilms, sowie einen Video-Server.

Video-Server sind Server, die in einem Speicher mehrere Videofilme gespeichert haben und auf Anfrage ausgewählte Videofilme zu ihren Kunden übertragen.

Eine Möglichkeit Videofilme zu übertragen ist aus US 5410343 bekannt. Die Kunden fragen über ein digitales Fernsprechnetz beim Video-Server die aktuellen Videofilme an und wählen einen aus. Der ausgewählte Videofilm wird vom Video-Server über einen breitbandigen Zusatzkanal über das digitale Fernsprechnetz übertragen und beim Kunden auf einem Fernseher dargestellt. Zur Bereitstellung des breitbandigen Zusatzkanals sind mehrere digitale Cross-Connect Systeme erforderlich. Durch die ungleichmäßige Ausnutzung der breitbandigen Zusatzkanäle wird die Übertragungskapazität des digitalen Fernsprechnetzes nicht optimal ausgenutzt. Auch ist die Auswahl der Videofilme technisch aufwendig, da dazu eine Protokollanpassungseinrichtung, ein sog. Video Gateway und ein Netzwerk-Management System erforderlich ist.

Es ist deshalb Aufgabe der Erfindung Videofilme weniger aufwendig zu übertragen.

Diese Aufgabe wird durch die Lehre der unabhängigen Patentansprüche 1, 5 und 7 gelöst. Vorteilhafte Ausgestaltungen sind den abhängigen Patentansprüchen 2 bis 4 und 6 zu entnehmen.

Ein besonderer Vorteil der Erfindung ist, daß ein Video-on-demand Dienst über ein bestehendes digitales Fernsprechnetz ermöglicht wird.

Ein weiterer Vorteil der Erfindung ist, daß der Video-on-demand Dienst auch in beweglichen Objekten angeboten werden kann.

Ein weiterer Vorteil ist, daß das diensteintegrierende digitale Netz durch den zusätzlichen Dienst in seiner Funktionalität erweitert, dadurch optimaler genutzt und in seiner Atraktivität aufgewertet wird.

Im folgenden wird die Erfindung anhand zweier Ausführungsbeispiele unter Zuhilfenahme der Figuren 1 bis 3 erläutert. Es zeigen:
- Fig. 1: eine schematische Darstellung eines ersten Ausführungsbeispiels eines Systems zum Übertragen von Videofilmen,
- Fig. 2: eine schematische Darstellung eines zweiten Ausführungsbeispiels eines Systems zum Übertragen von Videofilmen, und
- Fig. 3: eine numerische Tastatur eines Bildtelefons.

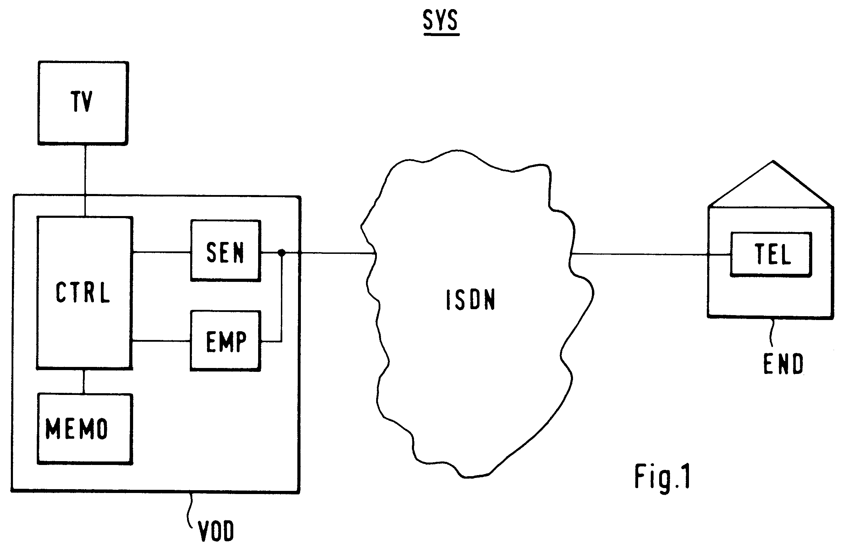

Ein erstes Ausführungsbeispiel der Erfindung wird nun anhand der Fig. 1 beschrieben. Fig. 1 zeigt ein erstes Ausführungsbeispiel eines erfindungsgemäßen Systems zum Übertragen von Videofilmen. Das System SYS zum Übertragen von Videofilmen beinhaltet einen Video-Server VOD, ein diensteintegrierendes digitales Netz ISDN, eine Endstelle END und eine Sendeeinrichtung TV zum Senden von Fernsehsignalen.

Das diensteintegrierende digitale Netz ISDN ist das sog. ISDN, bei dem Informationen schmalbandig in Nutzinformationskanälen und Signalisierungskanälen übertragen werden. Bei einem ISDN-Basisanschluß werden einer Endstelle z.B. zwei Nutzinformationskanäle mit einer Übertragungskapazität von je 64 kbit/s und ein Signalisierungskanal mit einer Übertragungskapazität von 16 kbit/s zugewiesen.

Die Sendeeinrichtung TV zum Senden von Fernsehsignalen ist z.B. die Sendeeinrichtung des Süddeutschen Rundfunks SDR der sein Fernsehprogramm z.B. in ein breitbandiges Kabelverteilnetz einspeist und es so zu mehreren Endstellen überträgt.

Die Endstelle END beinhaltet ein Bildtelefon TEL. Das Bildtelefon TEL ist z.B. aus dem Prospekt "Alcatel 2838 - Das Bildtelefon in ihrem Büro", 3/1995, bekannt.

Der Video-Server VOD beinhaltet eine Steuereinheit CTRL, einen Speicher MEMO, eine Sendeeinheit SEN und eine Empfangseinheit EMP. Die Steuereinheit CTRL ist z.B. ein Mikroprozessor oder ein digitaler Signalprozessor, der Speicher MEMO ist z.B. ein RAM-Speicher.

Der Video-Server VOD ist mit der Sendeeinrichtung TV und über das diensteintegrierende digitale Netz ISDN mit dem Bildtelefon TEL verbunden. Das Bildtelefon TEL ist über einen ISDN-Basisanschluß mit 2 x 64 kbit/s + 1 x 16 kbit/s mit dem diensteintegrierenden Netz ISDN verbunden.

In dem Speicher MEMO sind mehrere Videofilme gespeichert. Ein Videofilm ist z.B. eine Nachrichtensendung, die von der Sendeeinrichtung TV übertragen wurde und von der Steuereinheit CTRL empfangen und aufgezeichnet wurde. Bei der Übertragung von Nachrichtensendungen werden Studiobilder übertragen. Studiobilder zeigen von Bild zu Bild geringe Informationsänderungen. Wenn man lediglich die Informationsänderung von Bild zu Bild und nicht das gesamte Bild überträgt ist es möglich die Nachrichtensendung über einen schmalbandigen Kanal, mit z.B. 64 kbit/s zu übertragen. Ein weiterer Videofilm zeigt z.B. eine Landschaftsaufnahme als Werbefilm eines Reisebüros oder als Information über die aktuelle Wetterlage in einem Skigebiet.

Der Video-Server VOD bietet nun den interaktiven Videodienst zum Übertragen von ausgewählten Videofilmen vom Video-Server VOD zum Bildtelefon TEL der Endstelle an. Dazu wählt der Kunde die Rufnummer des Video-Servers VOD über das Bildtelefon TEL an, um eine Wählverbindung aufzubauen. Über den Signalisierungskanal und über eine Vermittlungsstelle des diensteintegrierenden digitalen Netzes ISDN wird die Wählverbindung zwischen Endstelle END und Video-Server VOD aufgebaut. Die Wählverbindung beinhaltet die beiden 64 kbit/s-Kanäle. Ein 64 kbit/s-Kanal dient zur Übertragung von Bildern, der andere 64 kbit/s-Kanal dient zur Übertragung von Sprache, also den zu den Bildern zugehörigen Ton. Ist die Wählverbindung aufgebaut sendet der Video-Server VOD ein Angebot von Videofilmen in Form eines Menues zur Endstelle END. Auf dem Bildschirm des Bildtelefons TEL werden z.B. Videofilmtitel geordnet nach Sachgebieten mit den dazugehörigen Auswahlnummern dargestellt. Sachgebiete sind z.B. Nachrichten vom Tage, Reise oder Sprachkurs. Die gewünschte Auswahlnummer wird vom Kunden über die numerische Tastatur des Bildtelefons TEL über den Signalisierungskanal zum Video-Server VOD übertragen. Der Video-Server VOD empfängt die Auswahlnummer über die Empfangseinheit EMP und leitet sie zur Steuereinheit CTRL weiter. Die Steuereinheit CTRL wählt den zur Auswahlnummer zugehörigen Videofilm aus den im Speicher MEMO abgespeicherten Videofilmen aus und überträgt ihn in Echtzeit über die Sendeeinheit und über die beiden 64 kbit/s-Kanäle zum Bildtelefon TEL. Während der gesamten Dauer der Übertragung bleibt die Wählverbindung zwischen Endstelle END und Video-Server VOD geschaltet. Die Endstelle END kann zu jeder Zeit die Wählverbindung zum Video-Server VOD unterbrechen, in dem wie z.B. bei einem normalen Telefongespräch einfach der Hörer des Bildtelefons TEL aufgelegt wird. Des weiteren kann durch die Eingabe einer vorgegebenen Nummer am Bildtelefon TEL die Übertragung des Videofilms gestoppt und gleichzeitig die Wählverbindung aufrechterhalten werden, um über das dann erscheinende Menue einen anderen Videofilm auszuwählen. Ist die Übertragung des ausgewählten Videofilms beendet, so überträgt der Video-Server VOD das Menue zur Endstelle. Erfolgt nach einer vorgegebenen Zeit keine Eingabe, so wird die Wählverbindung abgebrochen.

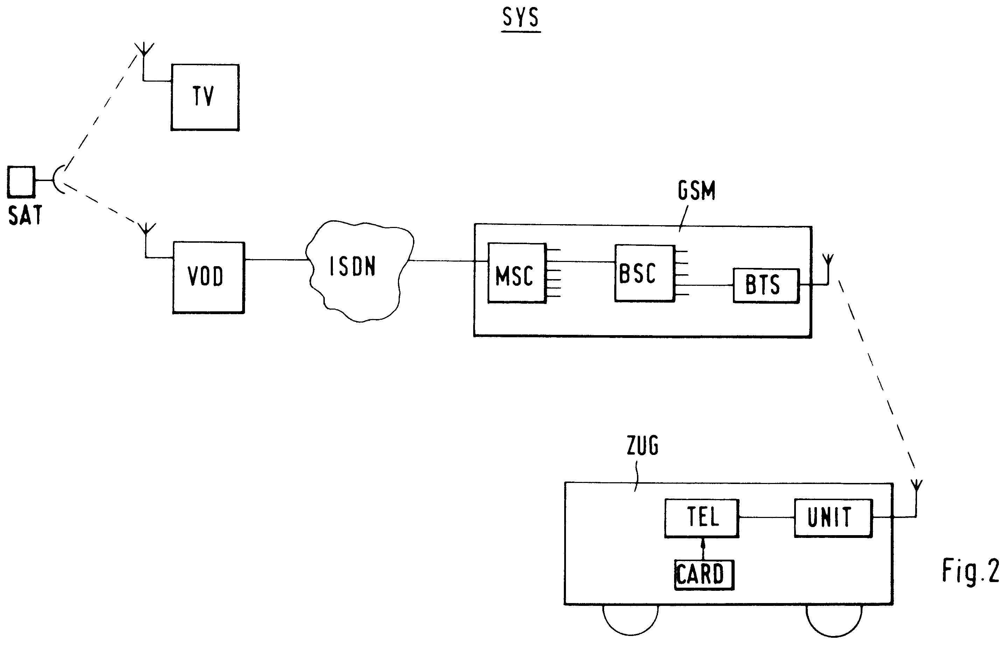

Ein zweites Ausführungsbeispiel der Erfindung wird nun anhand der Fig. 2 beschrieben. Fig. 2 zeigt ein zweites Ausführungsbeispiel des erfindungsgemäßen Systems zum Übertragen von Videofilmen. Das System SYS zum Übertragen von Videofilmen beinhaltet eine Sendeeinrichtung TV zum Senden von Fernsehsignalen, einen Satelliten SAT, einen Video-Server VOD, eine diensteintegrierendes digitales Netz ISDN, ein digitales Funknetz GSM und ein bewegliches Objekt ZUG.

Die Sendeeinrichtung TV zum Senden von Fernsehsignalen ist z.B. die Sendeeinrichtung einer Fernsehanstalt, die ihre Fernsehprogramme über eine Funkverbindung zu dem Satelliten SAT sendet, der sie zur Erde zurücksendet damit sie von mehreren Endstellen empfangen werden können.

Der Video-Server VOD ist vergleichbar dem Video-Server aus Fig. 1 aufgebaut. Der Video-Server VOD beinhaltet eine Steuereinheit, einen Speicher, eine Sendeeinheit, eine Empfangseinheit und zusätzlich eine Empfangseinrichtung zum Empfang der über den Satelliten SAT ausgesendeten Fernsehprogramme.

Das diensteintegrierende digitale Netz ISDN ist das sog. ISDN aus Fig. 1.

Das digitale Funknetz GSM ist als zellulares Mobilfunknetz nach dem GSM-Standard ausgelegt; GSM steht für Global System for Mobile Communication. Das digitale Funknetz GSM beinhaltet eine Funkfeststation BTS, eine Funkfeststationssteuerung BSC und eine Funkvermittlungsstelle MSC. Die Funkvermittlungsstelle MSC ist mit mehreren Funkfeststationssteuerungen verbindbar. Die Funkfeststationssteuerung BSC ist mit mehreren Funkfeststationen verbindbar. Die Funkfeststation BTS ist über die Funkfeststationssteuerung BSC und über die Funkvermittlungsstelle MSC mit dem diensteintegrierenden digitalen Netz ISDN verbunden.

Als Ausführungsform für das bewegliche Objekt ZUG ist ein Eisenbahnwaggon eines Eisenbahnzuges gewählt. Das bewegliche Objekt ZUG kann z.B. auch ein Kraftfahrzeug sein. Der Eisenbahnwaggon ZUG beinhaltet eine Einheit UNIT zum Empfang der über die Funkfeststation BTS ausgesendeten Funksignale und zur Umsetzung dieser Funksignale in Signale, die von einem Bildtelefon verarbeitet werden können, sowie zur Umsetzung der Signale des Bildtelefons in Funksignale, die dem GSM-Standard entsprechen. Der Eisenbahnwaggon ZUG beinhaltet ferner ein Bildtelefon TEL.

Das Bildtelefon TEL entspricht dem Bildtelefon aus Fig. 1 mit dem Unterschied, daß es zusätzlich einen Einschub für eine Chip-Karte und eine Kartenleseeinheit hat. Über die Kartenleseeinheit kann die Inbetriebnahme des Bildtelefons TEL blockiert werden. Steckt keine Chip-Karte im Einschub so ist das Bildtelefon TEL blockiert. Erst eine Chip-Karte CARD mit einem von dem Video-Server VOD abhängigen Kode entriegelt das Bildtelefon TEL, so daß eine Inbetriebnahme und der Aufbau einer Wählverbindung zu dem jeweiligen Video-Server, sowie eine Gebührenabrechnung ermöglicht wird. Der vom jeweiligen Video-Server (VOD) abhängige Kode beinhaltet die Rufnummer des jeweiligen Video-Servers (VOD). Die Rufnummer wird über die Kartenleseeinrichtung eingelesen und automatisch gewählt, wodurch eine Wählverbindung zu dem jeweiligen Video-Server (VOD) aufgebaut wird. Eine laufende Gebührenanzeige während der Übertragung eines Videofilms erfolgt z.B. auf dem Bildschirm des Bildtelefons.

Vom Bildtelefon TEL aus wird eine Wählverbindung über das digitale Funknetz GSM und das diensteintegrierende digitale Netz ISDN zum Video-Server VOD aufgebaut. Nach dem Aufbau der Wählverbindung erfolgt die Auswahl eines Videofilms und die Übertragung des ausgewählten Videofilms vergleichbar zur Auswahl und Übertragung wie sie zu Fig. 1 beschrieben ist.

Das Bildtelefon TEL ist z.B. in die Rückenlehne eines Sitzes integriert, womit es für einen Fahrgast des Eisenbahnzuges einfach bedienbar ist.

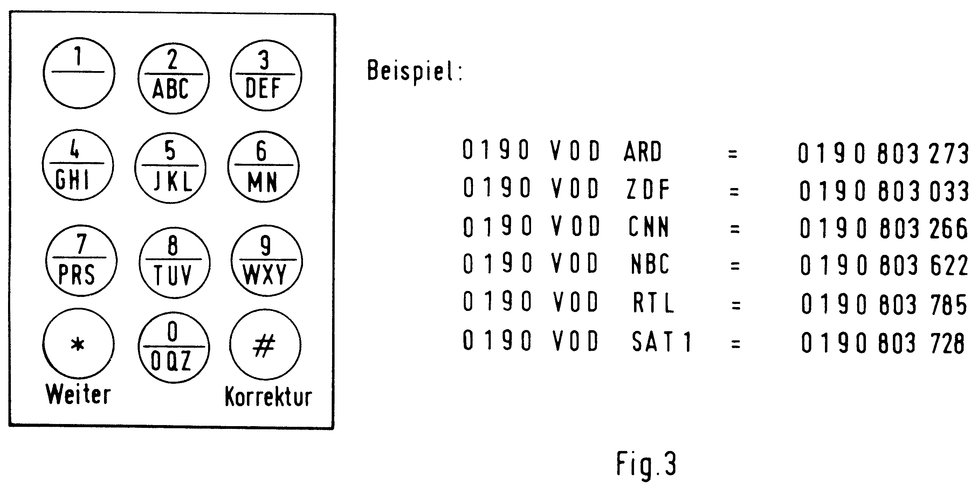

Fig. 3 zeigt eine alphanumerische Tastatur, die für das Bildtelefon aus Fig. 1 und das Bildtelefon aus Fig. 2 verwendet werden kann.

Die Tasten mit den Ziffern 2 bis 0 sind zusätzlich mit den Buchstaben A-Z des Alphabets belegt. So ist z.B. die Taste mit der Ziffer 2 mit den Buchstaben A, B und C belegt, die Taste mit der Ziffer 6 mit den Buchstaben M und N.

Jeder Video-Server VOD hat einen Video-Server-Namen. So ist ein Video-Server-Name z.B. nach dem Namen einer Fernsehanstalt, z.B. Zweites Deutsches Fernsehen, benannt. Als Kürzel für den Video-Server-Namen wählt man dann z.B. ZDF. Will der Kunde eine Wählverbindung zu dem Video-Server VOD, z.B. ZDF, aufbauen, so wählt er eine Dienstenummer plus einer Zusatznummer, die abhängig ist von dem Kürzel des Video-Server-Namens.

Als Beispiel für den Video-Server VOD von ZDF wählt der Kunde die Nummer 0190 als Dienstenummer plus VODZDF, was der Zusatznummer 803033 entspricht, um zu dem Video-Server VOD eine Wählverbindung aufzubauen.

Werden in dem Menue des Video-Servers VOD stets die gleichen Auswahlnummern für die jeweiligen Sachgebiete gewählt, z.B. 100 für die aktuellsten Nachrichten vom Tage, so kann der Kunde nach Kenntnis der Zuordnung auch durch eine Direktwahl einen Videofilm auswählen, d.h. ohne den Umweg über das Menue. Die aktuellsten Nachrichten vom Tage vom Video-Server VOD von CNN erhält der Kunde somit durch Eingabe von 0190 VOD CNN 100 an seinem Bildtelefon, was der Eingabe 0190 803 226 100 entspricht.

Bei beiden Ausführungsbeispielen ist das diensteintegrierende digitale Netz ISDN verwendet, bei dem Informationen schmalbandig übertragen werden. Unter schmalbandig wird eine Übertragungskapazität von 9,6 kbit/s bis 2 Mbit/s verstanden. Reicht eine Übertragungskapazität von 9,6 kbit/s, wie sie z.B. in digitalen Funknetzen verwendet werden, nicht aus um den ausgewählten Videofilm zu übertragen, so kann eine Wählverbindung aufgebaut werden, die mehrere Kanäle zusammenfaßt, so daß z.B. sieben mal 9,6 kbit/s = 67,3 kbit/s Übertragungskapazität zur Verfügung stehen.

## Patentansprüche

1. Dienst zum Übertragen eines Videofilms von einem Video-Server (VOD) zu einem Bildtelefon (TEL),
bei dem der Video-Server (VOD) und das Bildtelefon (TEL) über ein diensteintegrierendes digitales Netz (ISDN) miteinander verbunden sind,
bei dem der Video-Server (VOD) über das Bildtelefon (TEL) zum Aufbau einer Wählverbindung angewählt wird,
bei dem über das Bildtelefon (TEL) aus einem Angebot an Videofilmen ein Videofilm ausgewählt wird, und
bei dem der ausgewählte Videofilm über die Wählverbindung von Video-Server (VOD) zum Bildtelefon (TEL) übertragen wird.

2. Dienst nach Anspruch 1, **dadurch gekennzeichnet,** daß das Bildtelefon (TEL) über ein digitales Funknetz (GSM) mit dem diensteintegrierenden digitalen Netz (ISDN) verbunden ist, und daß das Bildtelefon (TEL) in einem beweglichen Objekt (ZUG) angeordnet ist.

3. Dienst nach Anspruch 1, **dadurch gekennzeichnet,** daß der ausgewählte Videofilm in Echtzeit übertragen wird.

4. Dienst nach Anspruch 1, **dadurch gekennzeichnet,** daß die Übertragung des ausgewählten Videofilms über das Bildtelefon (TEL) durch Unterbrechen der Wählverbindung gestoppt werden kann.

5. Video-Server (VOD) zum Übertragen von Videofilmen, mit einer Sendeeinheit (SEN), einer Empfangseinheit (EMP), einer Steuereinheit (CTRL) und einem Speicher (MEMO),
bei dem in dem Speicher (MEMO) mehrere Videofilme abspeicherbar sind,
bei dem über die Steuereinheit (CTRL) einzelne der im Speicher (MEMO) abgespeicherten Videofilme auswählbar und der Sendeeinheit (SEN) zuführbar sind,
bei dem die Sendeeinheit (SEN) und die Empfangseinheit (EMP) mit einem diensteintegrierenden digitalen Netz (ISDN) verbindbar sind,
bei dem der Video-Server (VOD) zum Aufbau einer Wählverbindung aus dem diensteintegrierenden Netz (ISDN) über die Empfangseinheit (EMP) anwählbar ist,
bei dem in Abhängigkeit von den an der Empfangseinheit (EMP) empfangenen Signalen ein abgespeicherter Videofilm auswählbar und über die Wählverbindung ins diensteintegrierende digitale Netz (ISDN) übertragbar ist.

6. Video-Server (VOD) nach Anspruch 5, **dadurch gekennzeichnet,** daß die Anwahl des Video-Servers (VOD) über eine Rufnummer erfolgt, die sich aus einer Dienstenummer plus einer Zusatznummer zusammensetzt, und
daß die Zusatznummer abhängig von dem Kürzel des Video-Server-Namens (ARD) gebildet ist.

7. Bildtelefon (TEL),
das einen Einschub für eine Chip-Karte (CARD) und eine Kartenleseeinrichtung hat,
das mittels einer Chip-Karte (CARD) mit einem von einem Video-Server (VOD) abhängigen Kode in Betrieb nehmbar ist,
bei dem über die Kartenleseeinrichtung aus dem vom Video-Server (VOD) abhängigen Kode die Rufnummer des Video-Servers (VOD) ermittelbar ist, und
bei dem der Aufbau einer Wählverbindung zu dem jeweiligen Video-Server (VOD) über die Kartenleseeinrichtung durch automatische Wahl der Rufnummer des Video-Servers (VOD) ermöglicht wird.
